# FASCICULE DE BREVET EUROPEEN

(11) **EP 3 159 988 B1**
(45) Date de publication et mention de la délivrance du brevet: **27.06.2018**
(21) Numéro de dépôt: 16306168.2
(22) Date de dépôt: 14.09.2016
(51) Int. Cl.: H02G 3/12

(54) **BOÎTE ÉLECTRIQUE ENCASTRABLE DANS DES CLOISONS D'ÉPAISSEURS DIFFÉRENTES**
ELEKTRISCHE DOSE ZUM EINBAU IN WANDEN MIT UNTERSCHIEDLICHER DICKE
ELECTRICAL BOX FOR INSTALLATION IN A WALL HAVING DIFFERENT THICKNESSES

(30) Priorité: 21.10.2015 FR 1560039
(43) Date de publication de la demande: 26.04.2017
(73) Titulaire: Legrand France, 87000 Limoges (FR); Legrand SNC, 87000 Limoges (FR)
(72) Inventeur: Janicot, Laurent, 87110 Solignac (FR); Cazillac, Stéphane, 87220 Feytiat (FR); Delmas, Simon, 87400 La Geneytouse (FR); Buisson, Philippe, 87800 Saint Maurice les Brousses (FR); Noailhac, David, 87170 Isle (FR)
(74) Mandataire: Jacobacci Coralis Harle

(56) Documents cités:
- EP-A1- 1 564 859
- DE-A1- 2 802 893
- DE-A1-102011 053 486
- FR-A1- 2 859 320

## Description

### DOMAINE TECHNIQUE AUQUEL SE RAPPORTE L'INVENTION

La présente invention concerne de manière générale l'encastrement d'appareillages électriques dans des cloisons creuses.

Elle concerne plus particulièrement une boîte électrique à engager au travers d'une ouverture pratiquée dans une paroi, comportant :
- un corps arrière qui comporte une paroi latérale en matériau rigide centrée sur un axe central, et au moins une patte d'encliquetage adaptée à s'accrocher à la paroi, et
- une collerette avant comprenant un épaulement en matériau rigide qui s'étend vers l'extérieur, en saillie par rapport à ladite paroi latérale.

### ARRIERE-PLAN TECHNOLOGIQUE

On rappelle que, de manière générale, une cloison creuse comporte une ossature en métal ou en bois, sur laquelle sont rapportés des panneaux de plâtre.

Une boîte électrique à engager au travers d'une ouverture pratiquée dans un tel panneau de plâtre comprend généralement une paroi latérale cylindrique, fermée à l'arrière par un fond et bordée à l'avant par un trottoir périphérique, lequel est adapté à s'appuyer contre la face avant du panneau de plâtre.

Elle comporte également des moyens de fixation à l'arrière du panneau de plâtre qui, combinés avec le trottoir périphérique, sont conçus pour venir pincer le bord de l'ouverture du panneau de plâtre.

Ces moyens de fixation peuvent par exemple se présenter sous la forme de griffes qui interviennent en position diamétralement opposée et qui, sous le contrôle de vis, sont aptes à venir s'accrocher à l'arrière du panneau de plâtre.

L'avantage de cette solution technique est qu'elle permet de fixer la boîte électrique dans des panneaux de plâtre d'épaisseurs variables.

L'inconvénient est que son installation s'avère fastidieuse, notamment lorsqu'il s'agit de manoeuvrer les vis pour faire remonter les griffes le long de la paroi latérale de la boîte électrique jusqu'à ce qu'elles s'accrochent au panneau de plâtre, tout en maintenant la boîte électrique dans l'orientation souhaitée.

On connaît aussi des boîtes électriques dont les moyens de fixation sont formés par des pattes d'encliquetage adaptées à s'accrocher à l'arrière des panneaux de plâtre. Ces boîtes électriques sont plus faciles à installer dans les panneaux de plâtre, puisqu'il suffit de les y engager pour qu'elles se clipsent automatiquement sur le panneau de plâtre. Malheureusement, de telles boîtes électriques ne peuvent s'utiliser que sur des panneaux de plâtre dont les épaisseurs sont égales à la distance séparant les pattes d'encliquetage du trottoir périphérique de la boîte.

On connaît aussi du document DE102011053486 une boîte électrique qui peut être encastrée dans une paroi tout en faisant légèrement saillie de celle-ci, de manière à ne pas pouvoir être recouverte lors de la pose d'un carrelage sur la paroi. Dans ce document, la boîte comporte un corps et un trottoir périphérique relié au corps par un soufflet.

### OBJET DE L'INVENTION

Ici, la présente invention propose une nouvelle boîte électrique susceptible de pouvoir se clipser dans des plaques de plâtre d'épaisseurs variables.

Plus particulièrement, on propose selon l'invention une boîte électrique telle que définie dans l'introduction, dans laquelle le corps arrière et la collerette avant sont disjoints et sont reliés ensemble par une ceinture périphérique en matériau souple, qui est élastiquement déformable selon l'axe central.

De cette manière, en étirant la ceinture selon l'axe central, il est possible d'ajuster la distance séparant la collerette avant des pattes d'encliquetage, de manière que ces dernières puissent s'encliqueter à l'arrière de la paroi, quelle que soit l'épaisseur de celle-ci.

L'intérêt d'utiliser une ceinture périphérique élastiquement déformable et en matériau plus souple que les pattes d'encliquetage et que la collerette est que le maintien de la boîte électrique en position dans la paroi est optimisé, en ce sens que les pattes d'encliquetage et la collerette avant prennent alors fermement en sandwich le bord de l'ouverture de la paroi, grâce à l'élasticité de la ceinture périphérique.

Un autre avantage peut être obtenu en utilisant une ceinture périphérique fermée (c'est-à-dire dépourvue d'ouverture). Une telle ceinture permet en effet d'assurer l'étanchéité de la boîte électrique, conformément aux normes BBC (« bâtiment basse consommation »).

D'autres caractéristiques avantageuses et non limitatives de la boîte électrique conforme à l'invention sont définies dans les revendications 2 à 17.

L'invention concerne également un procédé d'engagement tel que défini dans les revendications 17 à 20.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'une boîte électrique conforme à l'invention ;
- les figures 2 à 4 sont des vues schématiques en coupe de la boîte électrique de la figure 1, illustrant trois étapes de montage de cette boîte électrique dans une paroi ;
- la figure 5 est une vue schématique en perspective de la boîte électrique de la figure 1 et d'une partie du mécanisme d'appareillage qu'elle accueille ;
- les figures 6 et 8 sont des vues schématiques en perspective d'une première variante de réalisation de la boîte électrique de la figure 1, représentée sous deux angles différents ;
- les figures 7 et 9 sont respectivement des vues de détail des zones VII et IX des figures 6 et 8 ;
- la figure 10 est une vue en coupe selon le plan A-A de la figure 9 ;
- la figure 11 est une vue schématique en perspective d'une seconde variante de réalisation de la boîte électrique de la figure 1 ;
- la figure 12 est une vue en coupe de la boîte électrique de la figure 11 ;
- la figure 13 est une vue de détail de la zone XIII de la figure 12 ; et
- la figure 14 une vue en coupe de la boîte électrique de la figure 11, en position engagée au travers d'une ouverture pratiquée dans une paroi.

En préliminaire on notera que les éléments identiques ou similaires des différentes variantes de réalisation de l'invention représentées sur les différentes figures seront, dans la mesure du possible, référencés par les mêmes signes de référence et ne seront pas décrits à chaque fois.

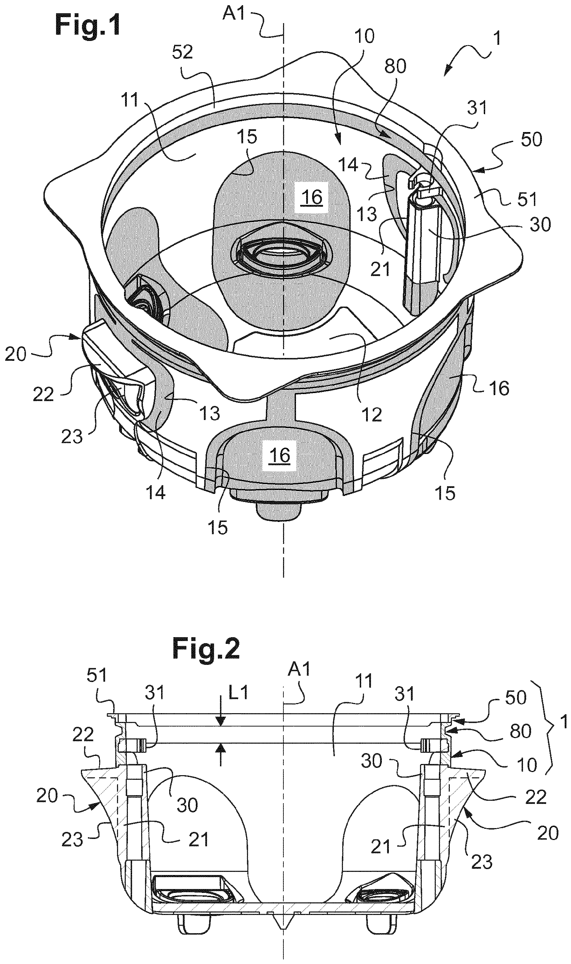

Sur les figures 1 à 5, on a représenté un mode de réalisation particulier d'une boîte électrique 1 à rapporter sur une paroi.

En préliminaire, on notera que sur la figure 1, les parties représentées en blanc sont des parties de la boîte électrique 1 réalisées dans un matériau rigide, tel que le polypropylène ou l'ABS (« acrylonitrile butadiène styrène »), et les parties grisées sont des parties réalisées dans un matériau sensiblement plus souple, tel que le SEBS (« polystyrène-b-poly(éthylène-butylène)-b-polystyrène »). Par « sensiblement plus souple », on entend que le module d'Young des parties grisées est au moins cinq fois inférieur à celui des parties en blanc. En pratique, contrairement aux parties en blanc, les parties grisées pourront être réalisées en matériau viscoélastique.

En l'espèce, cette boîte électrique 1 est du type à encastrer dans une cavité pratiquée dans une paroi. Cette paroi est ici formée par une cloison creuse.

On rappelle à ce sujet que, de manière connue, une telle cloison creuse est généralement composée d'une ossature métallique (formée de montants verticaux et de rails horizontaux non représentés) et de panneaux de plâtre rapportés sur l'une au moins des deux faces de l'ossature métallique.

En variante, il pourrait s'agir d'une cloison creuse maçonnée.

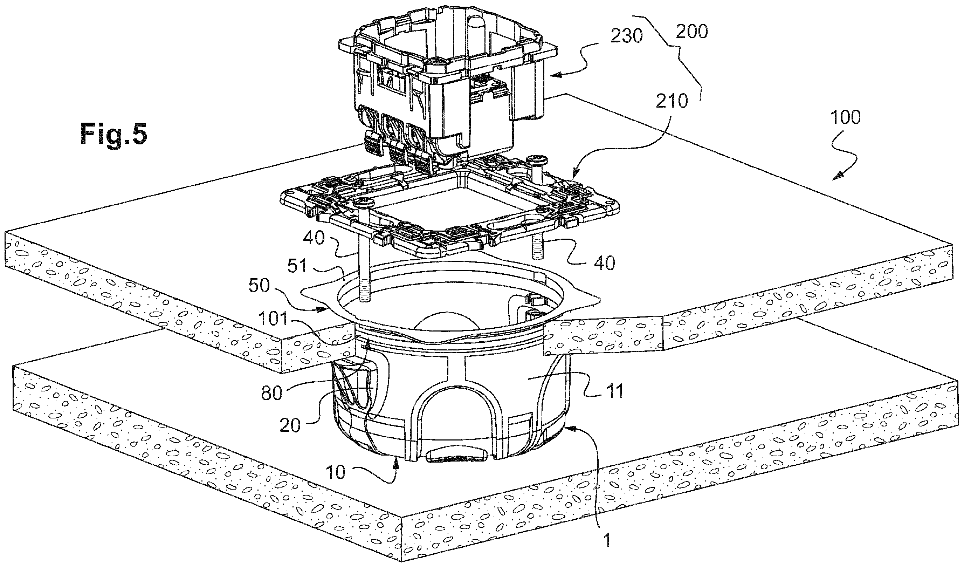

Ici, la cavité pratiquée dans la cloison creuse pour accueillir la boîte électrique 1 est simplement formée par une ouverture 101 réalisée à la scie cloche dans l'un des panneaux de plâtre 100 (voir par exemple la figure 5).

Dans la description, les termes « avant » et « arrière » seront utilisés par rapport à la direction du regard de l'installateur de la boîte électrique 1 dans le panneau de plâtre 100. Ainsi, les termes avant et arrière désigneront respectivement le lieu tourné vers l'extérieur de la cloison creuse et le lieu tourné à l'opposé.

Ici, comme le montre la figure 1, la boîte électrique 1 présente une forme générale cylindrique de révolution autour d'un axe central A1, de manière à pouvoir recevoir un appareillage électrique 200 (voir figure 5). En variante, elle pourrait présenter une forme différente, notamment parallélépipédique ou oblongue (de manière à délimiter plusieurs postes d'accueil d'appareillages électriques).

Comme cela apparaît sur la figure 1, cette boîte électrique 1 comporte un corps arrière 10 et une collerette avant 50.

Le corps arrière 10 comporte une paroi latérale 11 en matériau rigide qui est centrée sur l'axe central A1, qui est fermée à l'arrière par une paroi de fond 12 et qui est ouverte vers l'avant.

La collerette avant 50 comprend quant à elle une partie tubulaire 52, de diamètre égal à celui de la paroi latérale 11 du corps arrière 10, et un épaulement 51 en matériau rigide qui est recourbé vers l'extérieur, en saillie par rapport à la partie tubulaire 52.

Cet épaulement 51 forme ici un trottoir périphérique, puisqu'il longe extérieurement l'ensemble du bord avant de la partie tubulaire 52. Il est ainsi conçu pour prendre appui contre la face avant du panneau de plâtre 100, autour de l'ouverture 101. En variante, il pourrait présenter une forme différente. Ainsi pourrait-il éventuellement être interrompu par des encoches.

Quelle que soit sa forme, cet épaulement 51 permet de bloquer la boîte électrique 1 par rapport au panneau de plâtre 100 vers l'arrière.

Pour bloquer la boîte électrique 1 vers l'avant, le corps arrière 10 comporte deux pattes d'encliquetage 20 adaptées à s'accrocher à la face arrière du panneau de plâtre 100.

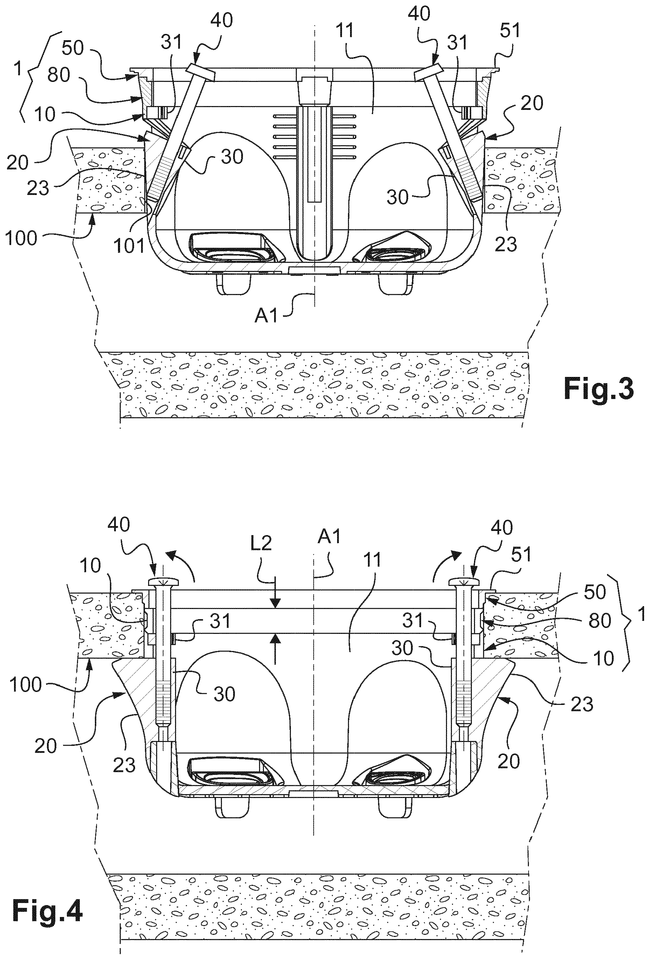

Ces deux pattes d'encliquetage 20 sont situées de manière diamétralement opposée par rapport à l'axe central A1. Elles sont chacune mobiles entre une position déployée (figure 2) dans laquelle elles s'étendent au moins en partie en saillie à l'extérieur de ladite paroi latérale 11, et une position rétractée vers l'axe central A1 par rapport à la position déployée (figure 3).

Ces pattes d'encliquetage 20 seront décrites plus en détail dans la suite de cet exposé.

La boîte électrique 1 comporte par ailleurs des moyens d'assujettissement d'un appareillage électrique. Comme le montre la figure 1, il s'agit ici de puits de vissage 30 taraudés intérieurement, permettent d'y visser des vis de fixation d'un support d'appareillage électrique. En variante, il pourrait s'agir de puits de vissage pour vis auto-taraudeuses.

Ici, cette boîte électrique 1 est conçue pour pouvoir être montée sur des panneaux de plâtre 100 d'épaisseurs différentes.

Pour cela, selon une caractéristique particulièrement avantageuse de l'invention, le corps arrière 10 et la collerette avant 50 de la boîte électrique 1 sont disjoints et sont reliés ensemble par une ceinture périphérique 80 en matériau souple, qui est élastiquement déformable selon l'axe central A1.

Cette ceinture périphérique 80 est ici cylindrique de révolution autour de l'axe central A1. A l'état non contraint, elle présente un diamètre intérieur, un diamètre extérieur et une épaisseur respectivement égaux au diamètre intérieur, au diamètre extérieur et à l'épaisseur de la paroi latérale 11 du corps arrière 10. Elle s'étend entre le bord arrière de la partie tubulaire 52 de la collerette avant 50 et le bord avant de la paroi latérale 11 du corps arrière 10.

En variante, elle pourrait présenter une forme différente, avec par exemple une épaisseur variable le long de sa hauteur.

Cette ceinture périphérique 80 est déformable élastiquement selon l'axe central A1.

Ici, et de manière préférentielle, elle est déformable élastiquement tant en traction (pour être étirée), qu'en compression (pour être écrasée).

Elle est ainsi étirable depuis sa position de repos (non contrainte) jusqu'à une position maximum d'étirement élastique, avec une amplitude supérieure ou égale à 13 millimètres (et ici au moins égale à 15 millimètres).

Elle est en outre comprimable depuis sa position de repos jusqu'à une position maximum d'écrasement, avec une amplitude supérieure ou égale à 3 millimètres (et ici au moins égale à 5 millimètres).

Ici, la position de repos est telle que, lorsque la ceinture périphérique 80 n'est pas contrainte, l'épaulement 51 et les pattes d'encliquetage 20 de la boîte électrique sont distants d'une distance L1 égale à 13 millimètres, ce qui permet de rapporter la boîte électrique sur un panneau de plâtre de 13 millimètres d'épaisseur (voir figure 2).

Bien entendu, cette position de repos pourrait être choisie différemment (par exemple de telle sorte que la distance L1 soit inférieure à 13 mm ou qu'elle soit supérieure à 13 mm).

Ici, lorsque la ceinture périphérique 80 est étirée avec une amplitude de 13 millimètres par rapport à la position de repos, l'épaulement 51 et les pattes d'encliquetage 20 de la boîte électrique sont distants d'une distance L2 égale à 26 millimètres, ce qui permet de rapporter la boîte électrique sur un panneau de plâtre de 26 millimètres d'épaisseur (voir figure 4).

Lorsque le panneau de plâtre présente une épaisseur inférieure à 13 millimètres, par exemple égale à 10 millimètres, le vissage d'un mécanisme d'appareillage dans les puits de vissage 30 permettra de comprimer la ceinture périphérique 80, si bien que cette dernière ne s'oppose pas à la fixation de la boîte dans la cloison.

On comprend ainsi qu'il devient possible de monter la boîte électrique 1 sur une grande variété de parois, avec une grande facilité puisque ce montage se résume à encliqueter la boîte électrique sur la paroi.

On peut maintenant décrire plus en détail les deux pattes d'encliquetage 20.

Ces deux pattes d'encliquetage 20 sont identiques.

Comme le montre la figure 1, chaque patte d'encliquetage 20 est située dans une ouverture 13 pratiquée dans la paroi latérale 11 du corps arrière 10.

Elle comporte une lamelle de flexion 21 qui, au repos, s'étend dans le prolongement de la paroi latérale 11 du corps arrière 10 et qui porte, du côté de son extrémité avant, un rebord d'accrochage 22 en saillie vers l'extérieur.

Chaque lamelle de flexion 21 présente une forme allongée parallèlement à l'axe central A1, avec trois bords libres et un bord arrière qui se raccorde à la paroi latérale 11 du corps arrière 10 par une partie rigide, pour former une sorte de charnière.

Les trois bords libres sont quant à eux reliés au bord de l'ouverture 13 par un joint 14 en matériau souple, qui permet de garantir l'étanchéité de la boîte électrique autour de chaque patte d'encliquetage 20. Ce joint 14 est ici étirable et déformable élastiquement, pour ne pas former obstacle au basculement de la patte d'encliquetage 20 entre ses positions déployée et rétractée. Il permet en outre de rappeler automatiquement la patte d'encliquetage 20 en position déployée.

Le rebord d'accrochage 22 s'étend sensiblement à angle droit par rapport à la lamelle de flexion 21 (à 5 degrés près), à l'avant de celle-ci. Il présente ainsi une face avant parallèle à la face arrière de l'épaulement 51, ce qui lui permet de s'appliquer contre la face arrière du panneau de plâtre 100 lorsque l'épaulement s'applique contre la face avant de celui-ci.

Au repos, alors que la patte d'encliquetage 20 est en position déployée, le rebord d'accrochage 22 fait saillie à l'extérieur de la paroi latérale 11 du corps arrière 10. En position rétractée, il est entièrement situé à l'intérieur de la paroi latérale 11 du corps arrière 10, de manière à ne pas gêner l'engagement de ce corps arrière 10 au travers de l'ouverture 101 pratiquée dans le panneau de plâtre 100.

Comme le montrent les figures 1 et 2, la patte d'encliquetage 20 porte, entre la face arrière de son rebord d'accrochage 22 et la face extérieure de sa lamelle de flexion 21, des nervures 23 sensiblement triangulaires qui permettent non seulement de rigidifier l'ensemble, et qui forment en outre des rampes 23 permettant de forcer la patte d'encliquetage 20 à se déplacer vers sa position rétractée à la faveur de l'enfoncement de la boîte électrique 1 dans l'ouverture 101.

Ici, chaque patte d'encliquetage 20 est rappelée élastiquement en position déployée par le joint 14 et par sa charnière qui la relie au reste du corps arrière 10. Ainsi, une fois la boîte électrique 1 installée dans le panneau de plâtre 100, un effort de traction exercée sur celle-ci ne permet pas de la ressortir de l'ouverture 101.

Pour permettre l'extraction de la boîte électrique 1 hors de l'ouverture 101, chaque patte d'encliquetage 20 porte alors une partie de manoeuvre qui est accessible à un usager, de manière à permettre à ce dernier de forcer la patte d'encliquetage 20 à basculer en position rétractée.

On pourrait ainsi prévoir que la face intérieure de la lamelle de flexion de chaque patte d'encliquetage porte un ergot dans lequel serait prévue une fente, de manière que l'usager puisse y engager la pointe d'un outil de manière à forcer la patte d'encliquetage à basculer.

Ici, cette fonction est assurée par les puits de vissage 30, dont on rappelle qu'ils sont conçus pour recevoir la tige filetée d'une vis 40 de fixation d'un appareillage électrique.

Pour cela, comme le montre la figure 1, chaque puits de vissage 30 est fixé exclusivement à la face interne de la lamelle de flexion 21 de la patte d'encliquetage 20 correspondante, de manière à ne pas gêner le basculement de celle-ci.

On comprend alors que lorsque le puits de vissage 30 accueille une vis 40, l'usager peut utiliser cette dernière à la manière d'un levier pour forcer la patte d'encliquetage 20 à basculer en position rétractée (voir figure 3).

De manière à indiquer le positionnement de la patte d'encliquetage et à assurer le maintien de la patte d'encliquetage en position déployée, il est ici prévu un crochet 31.

Comme le montre la figure 1, lorsque la patte d'encliquetage 20 est en position déployée, ce crochet 31 s'étend à l'avant et dans l'axe du puits de vissage 30.

Ce crochet 31 présente deux pattes qui délimitent entre elles une ouverture de diamètre égal, au jeu près, à celui de la vis 40 (et à celui de l'alésage taraudé prévu dans le puits de vissage 30), de manière à assurer un bon maintien de la vis 40. Cette ouverture est ouverte vers l'axe central A1 pour permettre à la vis 40 de s'échapper latéralement du crochet 31 lorsque l'usager souhaite la déclipser de ce crochet 31.

En variante, le crochet pourrait ne présenter qu'une seule patte.

Ici, ce crochet 31 en matériau rigide est situé en saillie de la face intérieure de la paroi latérale 11 du corps arrière 10. En variante, il pourrait être situé autrement, par exemple en saillie de la collerette avant 50.

On observe par ailleurs sur la figure 1 que pour permettre de tirer à l'intérieur de la boîte électrique 1 des conducteurs électriques d'amenée de courant, le corps arrière 10 présente au moins une ouverture de passage 15.

Ici, il est prévu quatre ouvertures de passage 15 qui s'étendent chacune à cheval sur la paroi latérale 11 et sur la paroi de fond 12 du corps arrière 10 de la boîte électrique 1.

Ces ouvertures de passage 15 sont initialement fermées par des opercules 16 en matériau souple, qui sont transperçables ou manuellement retirables pour permettre le passage et le maintien de l'extrémité d'une gaine de cheminement à l'intérieur de laquelle courent des fils électriques.

Ici, la boîte électrique 1 est fabriquée en deux opérations successives, dont une opération de moulage des parties rigides (en blanc sur la figure 1), suivie d'une opération de surmoulage des parties flexibles (grisées sur la figure 1). Le film 14, la ceinture périphérique 80 et les opercules 16 sont donc formés d'une seule pièce, dans un même matériau.

Sur les figures 2 à 4, on a représenté en coupe les étapes de mises en place de la boîte électrique 1 au travers de l'ouverture 101 pratiquée dans le panneau de plâtre 100.

Initialement, comme le montre la figure 2, les pattes d'encliquetage sont en position déployée et la ceinture périphérique 80 n'est pas étirée.

Puis, lorsque l'installateur force la boîte électrique 1 à s'engager au travers de l'ouverture 101, les rampes 23 des pattes d'encliquetage 20 viennent en appui contre le bord de l'ouverture 101, ce qui contraint les pattes d'encliquetage 20 à basculer en position rétractée (voir figure 3).

Ici, on pourra noter que si l'effort à exercer axialement sur la boîte électrique 1 pour la faire rentrer dans l'ouverture 101 est trop important, l'installateur peut faire levier avec les vis 40 pour forcer les pattes d'encliquetage 20 à basculer en position rétractée de manière à ce qu'elle ne gênent par l'insertion de la boîte électrique 1 dans l'ouverture 101.

Généralement, lorsque l'épaulement 51 de la collerette avant 50 arrive en appui contre la face avant du panneau de plâtre 100, les pattes d'encliquetage 20 sont encore situées dans l'ouverture 101, si bien qu'elles ne peuvent pas se déployer à l'arrière du panneau de plâtre 100.

L'installateur peut alors forcer la ceinture périphérique 80 à s'étirer axialement, soit en poussant sur la paroi du fond 12 du corps arrière 10, soit en poussant sur les vis 40 vers l'arrière.

Dès que les pattes d'encliquetage 20 dépassent le bord arrière de l'ouverture 101, elles se déploieront alors naturellement à l'arrière du panneau de plâtre 100.

Comme le montre la figure 4, l'installateur pourra alors s'assurer de la fiabilité du montage en clipsant les vis 40 dans les crochets 31 (ce qui ne sera possible que si la boîte électrique 1 est parfaitement engagée dans le panneau de plâtre 100 et si les pattes d'encliquetage 20 sont situées à l'arrière de ce panneau de plâtre 100).

Une fois la boîte électrique 1 en place, l'installateur peut y rapporter l'appareillage électrique 200. Le support 210 et le socle 230 de cet appareillage électrique 200 sont ici représentés en vue éclatée sur la figure 5. Ils présentent des formes classiques et ne seront donc pas décrits en détail.

On observera seulement sur cette figure que le support 210, qui sert au montage du socle 230 à l'intérieur de la boîte électrique 1, se présente sous la forme d'un cadre plat carré dont le bord intérieur est conçu pour recevoir, par encliquetage, le socle 230 et dont les quatre branches présentent un orifice en forme de trou de serrure propre à permettre sa fixation à la boîte électrique 1, au moyen des vis 40.

Lorsque l'usager souhaite retirer la boîte électrique 1 du panneau de plâtre 100, il doit retirer l'appareillage électrique 200 en dévissant partiellement les vis 40, puis il peut ensuite forcer les vis 40 à sortir latéralement des crochets 31, de manière à faire basculer les pattes d'encliquetage 20 en position rétractée. Alors, dès que les pattes d'encliquetage 20 auront basculé, la ceinture périphérique 80 reprendra sa forme initiale (non étirée), ce qui permettra que les pattes d'encliquetage 20 soient retenues en position rétractée par le bord de l'ouverture 101. L'usager pourra alors facilement extraire la boîte électrique 1 hors de l'ouverture 101.

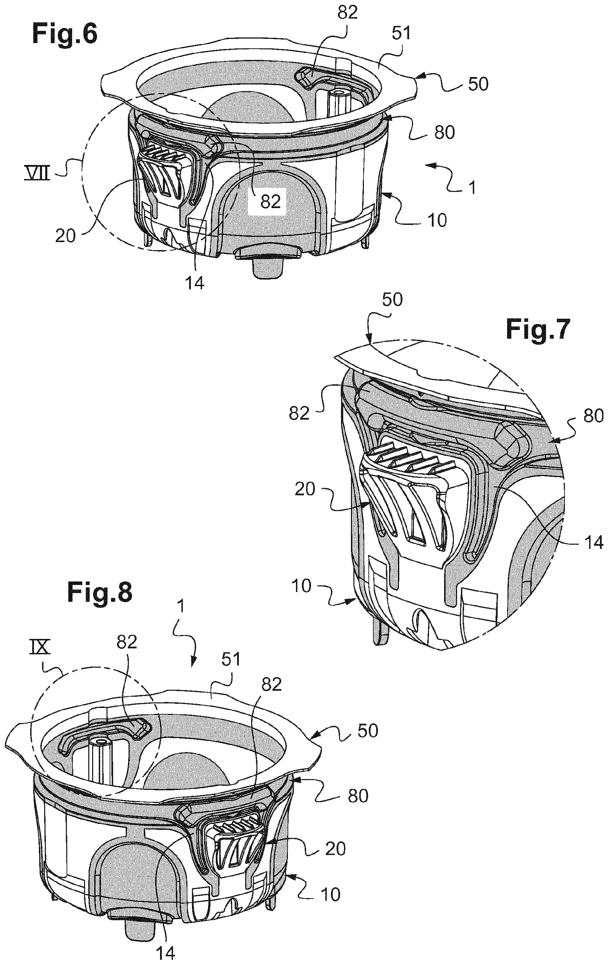

Sur les figures 6 à 10, on a représenté une première variante de réalisation de la boîte électrique 1.

Dans cette première variante, la boîte électrique 1 diffère de celle représentée sur la figure 1 au niveau seulement des zones situées à l'avant des pattes d'encliquetage 20.

En effet, dans cette variante, la boîte électrique 1 est dépourvue de crochet (31 sur la figure 1) et les joints 14 en matériau souple (dont on rappelle qu'ils permettent de garantir l'étanchéité de la boîte électrique autour de chaque patte d'encliquetage 20) communiquent avec la ceinture périphérique 80.

Alors, lorsque les pattes d'encliquetage 20 se rétractent à l'intérieur de la boîte électrique 1, elles étirent la ceinture périphérique 80 dans les deux zones situées à l'avant des pattes d'encliquetage 20.

On comprend alors que lorsque la boîte électrique 1 est en cours d'installation sur un panneau de plâtre 100 d'épaisseur importante, ces zones de la ceinture périphérique 80 sont doublement étirées. De ce fait, l'effort à exercer pour installer la boîte sur le panneau de plâtre s'en trouve accru.

Pour réduire cet effort, la ceinture périphérique 80 est déformée à l'avant de chaque patte d'encliquetage 20, de sorte qu'elle présente deux bourrelets 82 diamétralement opposés.

Tel que représenté sur les figures, chaque bourrelet 82 forme une sorte de renflement en saillie vers l'extérieur par rapport au reste de la ceinture périphérique 80, qui s'étend sur une longueur légèrement supérieure à la largeur de la patte d'encliquetage 20. En variante, ce bourrelet 82 pourrait faire saillie plutôt vers l'intérieur de la boîte.

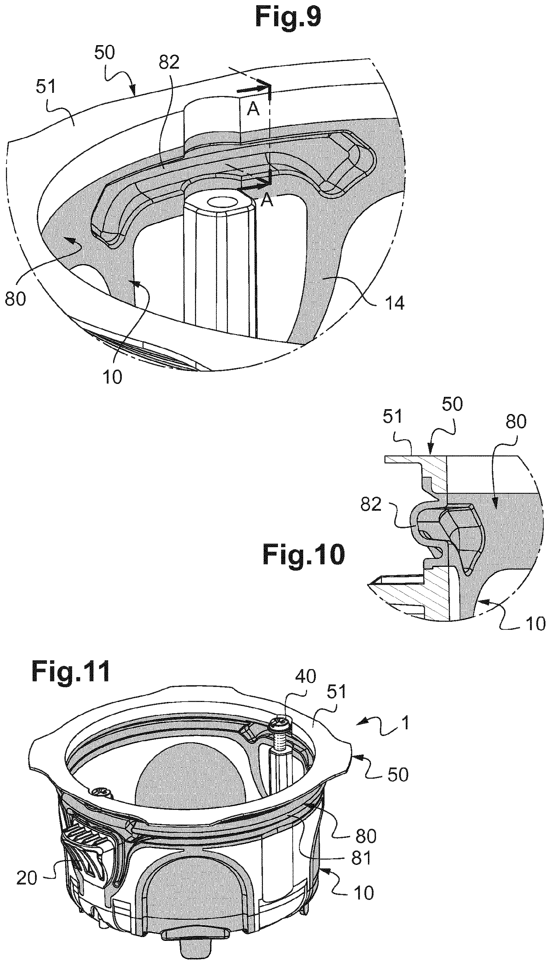

Comme le montre bien la figure 10, ce bourrelet 82 présente une section en demi-cercle qui, lorsque la patte d'encliquetage bascule vers l'intérieur de la boîte, est prévu pour se déformer (sans étirer la matière qui compose la ceinture périphérique). Ce bourrelet est ensuite prévu pur s'étirer avec l'ensemble de la ceinture périphérique 80, pour permettre aux pattes d'encliquetage 20 de s'accrocher à l'arrière du panneau de plâtre.

Ici, les extrémités de ce bourrelet 82, qui sont situées de part et d'autre de la patte d'encliquetage 20, sont légèrement recourbées vers l'arrière pour réduire au mieux l'effort nécessaire pour faire basculer les pattes d'encliquetage vers l'intérieur de la boîte.

Sur les figures 11 à 14, on a représenté une seconde variante de réalisation de la boîte électrique 1.

Dans cette seconde variante, la boîte électrique 1 diffère de celle représentée sur les figures 6 à 10 au niveau seulement de la ceinture périphérique 80.

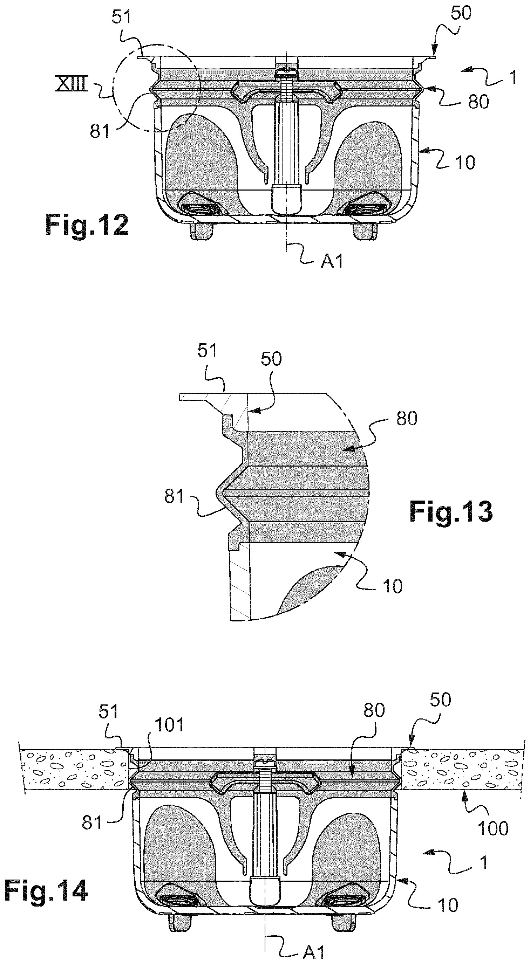

En effet, dans cette variante, la ceinture périphérique 80 présente, à l'état non contraint, au moins un renflement périphérique 81. Comme le montre bien la figure 13, la ceinture périphérique 80 présente ainsi une section transversale qui n'est pas droite. La ceinture périphérique 80 peut donc être allongée selon l'axe central A1 sans étirer la matière qui la compose, en profitant seulement de la réserve de longueur offerte par le renflement périphérique 81.

Dans la variante représentée, ce renflement périphérique 81 forme un soufflet qui est adapté à être déployé ou comprimé selon l'axe central A1. De cette manière, dans cette variante, lorsque la boîte électrique est installée sur un panneau de plâtre d'épaisseur importante, l'ajustement de la hauteur de la ceinture périphérique 80 peut se faire grâce au déploiement du soufflet, puis grâce à l'étirement élastique de la matière composant la ceinture périphérique 80.

Comme le montre bien la figure 14, un autre avantage apporté par la forme de soufflet de la ceinture périphérique 80 est que, lorsque le panneau de plâtre présente une épaisseur modérée, la ceinture périphérique 80 est en mesure de venir en appui contre la face intérieure de l'ouverture 101 pratiquée dans le panneau de plâtre 100. De cette manière, elle forme un joint d'étanchéité entre l'avant et l'arrière du panneau de plâtre, ce qui favorise l'isolation thermique du bâtiment.

La présente invention n'est nullement limitée aux modes de réalisation décrits et représentés, mais l'homme du métier saura y apporter toute variante possible.

Ainsi, on aurait pu prévoir que les puits de vissage soient portés, non pas par les pattes d'encliquetage, mais par la paroi latérale du corps arrière de la boîte électrique.

On aurait pu également prévoir que les moyens d'assujettissement de l'appareillage électrique ne se présentent pas sous la forme de puits de vissage, mais plutôt sous la forme de fenêtres prévues en creux dans la face interne de la paroi latérale du corps arrière de la boîte électrique. Ces fenêtres permettraient alors de fixer le support d'appareillage dans le corps arrière de la boîte électrique, par encliquetage.

Selon une autre variante de l'invention non représentée sur les figures, on aurait pu prévoir que le rebord d'accrochage de chaque patte d'encliquetage présente un moyen d'assujettissement d'une cale. A titre d'exemple, la face avant de ce rebord d'accrochage pourrait présenter en creux une rainure en queue d'aronde, permettant d'y fixer la cale. Cette cale formant une surépaisseur, elle pourra alors permettre de fixer la boîte électrique sur des panneaux de plâtre de faibles épaisseurs. Elle pourra également permettre de forcer la ceinture périphérique à davantage s'étendre axialement, de manière à accroître le volume intérieur de la boîte électrique 1 (ce qui permettra d'y rapporter des appareillages électriques volumineux).

Selon une autre variante de l'invention, on aurait pu prévoir que la ceinture périphérique soit partiellement ouverte. En effet, la ceinture périphérique étant située dans l'épaisseur de la paroi en plâtre, les ouvertures prévues dans la ceinture périphérique ne déboucheraient pas vers l'extérieur si bien qu'elles n'affecteraient pas le caractère étanche de la boîte.

## Revendications

1. Boîte électrique (1) à engager au travers d'une ouverture (101) pratiquée dans une paroi (100), comportant :
- un corps arrière (10) qui comporte une paroi latérale (11) en matériau rigide centrée sur un axe central (A1), et au moins une patte d'encliquetage (20) adaptée à s'accrocher à la paroi (100), et
- une collerette avant (50) comprenant un épaulement (51) en matériau rigide qui s'étend vers l'extérieur, en saillie par rapport à ladite paroi latérale (11), **caractérisée en ce que** le corps arrière (10) et la collerette avant (50) sont disjoints et sont reliés ensemble par une ceinture périphérique (80) en matériau souple, qui est élastiquement déformable selon l'axe central (A1).

2. Boîte électrique (1) selon la revendication précédente, dans laquelle la ceinture périphérique (80) est déformable élastiquement selon l'axe central (A1), en traction, avec une amplitude au moins égale à 13 millimètres, préférentiellement supérieure ou égale à 15 millimètres.

3. Boîte électrique (1) selon l'une des revendications précédentes, dans laquelle la ceinture périphérique (80) est déformable élastiquement selon l'axe central (A1), en compression, avec une amplitude au moins égale à 3 millimètres, préférentiellement supérieure ou égale à 5 millimètres.

4. Boîte électrique (1) selon l'une des revendications 1 à 3, dans laquelle la ceinture périphérique (80) présente, à l'état non contraint, une forme cylindrique de révolution autour de l'axe central (A1).

5. Boîte électrique (1) selon l'une des revendications 1 à 3, dans laquelle la ceinture périphérique (80) présente, à l'état non contraint, au moins un renflement périphérique (81).

6. Boîte électrique (1) selon la revendication précédente, dans laquelle le renflement périphérique (81) forme un soufflet adapté à être étiré et comprimé selon l'axe central (A1).

7. Boîte électrique (1) selon l'une des revendications précédentes, dans laquelle chaque patte d'encliquetage (20) est mobile entre une position déployée dans laquelle elle s'étend en saillie de ladite paroi latérale (11) et une position rétractée vers l'axe central (A1).

8. Boîte électrique (1) selon la revendication précédente, dans laquelle, chaque patte d'encliquetage (20) étant rappelée élastiquement en position déployée, chaque patte d'encliquetage (20) porte une partie de manoeuvre accessible à un usager pour placer ladite patte d'encliquetage (20) en position rétractée.

9. Boîte électrique selon la revendication 8, dans laquelle chaque patte d'encliquetage (20) porte un puits de vissage (30) qui est adapté à accueillir la tige filetée d'une vis (40) de fixation d'un mécanisme d'appareillage et qui forme ladite partie de manoeuvre.

10. Boîte électrique (1) selon la revendication précédente, dans laquelle il est prévu, à l'avant de ladite patte d'encliquetage (20), un crochet (31) délimitant une ouverture qui est située dans l'axe dudit puits de vissage (30) pour recevoir la tige filetée de la vis (40) et qui est ouverte vers l'axe central (A1) pour permettre à la vis (40) de s'échapper de ce crochet (31).

11. Boîte électrique (1) selon la revendication 8, dans laquelle ladite partie de manoeuvre présente une fente d'insertion de la pointe d'un outil.

12. Boîte électrique (1) selon l'une des revendications précédentes, dans laquelle chaque patte d'encliquetage (20) est située dans une ouverture (13) pratiquée dans la paroi latérale (11) et est reliée au bord de l'ouverture (13), au moins en partie, par un joint (14) en matériau souple.

13. Boîte électrique (1) selon la revendication précédente, dans laquelle, ledit joint (14) étant en partie formé par la ceinture périphérique (80), ladite ceinture périphérique (80) forme, au droit de chaque patte d'encliquetage (20), un bourrelet (82).

14. Boîte électrique (1) selon la revendication précédente, dans laquelle ledit bourrelet (82) s'étend sur une partie seulement du contour de la ceinture périphérique (80), sur une longueur supérieure à la largeur de la patte d'encliquetage (20).

15. Boîte électrique (1) selon l'une des revendications précédentes, dans laquelle chaque patte d'encliquetage (20) porte sur sa face extérieure une rampe (23) permettant de forcer ladite patte d'encliquetage (20) à se déplacer vers sa position rétractée à la faveur de l'enfoncement de la boîte électrique (1) dans ladite ouverture (101).

16. Boîte électrique selon l'une des revendications précédentes, dans laquelle chaque patte d'encliquetage présente un rebord avant tourné vers ledit épaulement, qui porte un moyen d'assujettissement d'une cale.

17. Boîte électrique (1) selon l'une des revendications précédentes, dans laquelle le corps arrière (10) présente au moins une ouverture (15) de passage d'un conducteur électrique, qui est obturée par un opercule (16) en matériau souple.

18. Procédé d'engagement d'une boîte électrique (1) conforme à l'une des revendications précédentes au travers d'une ouverture (101) pratiquée dans une paroi (100), dans lequel il est prévu d'exercer sur le corps arrière (10) de la boîte électrique (1) un effort vers le fond de la paroi (100) de telle sorte que chaque patte d'encliquetage (20) s'escamote à l'intérieur du corps arrière (10), que l'épaulement (51) s'applique contre la paroi (100), puis que chaque patte d'encliquetage (20) se déploie automatiquement à l'extérieur du corps arrière (10) et s'accroche à l'arrière de la paroi (100).

19. Procédé d'engagement selon la revendication précédente, dans lequel, la boîte électrique (1) étant conforme à la revendication 9 ou 10, il est prévu de forcer chaque patte d'encliquetage (20) à se déployer à l'extérieur du corps arrière (10), en exerçant un effort latéral sur la vis (40).

20. Procédé d'extraction d'une boîte électrique (1) conforme à l'une des revendications précédentes initialement située dans une ouverture (101) pratiquée dans une paroi (100), comportant des étapes consistant à :
- manoeuvrer chaque patte d'encliquetage (20) de manière à ce qu'elle s'escamote à l'intérieur du corps arrière (10) de la boîte électrique (1), et
- tirer la boîte électrique (1) hors de l'ouverture (101).

## Patentansprüche

1. Elektrische Dose (1) zum Einbringen durch eine in einer Wand (100) geschaffene Öffnung (101), mit:
- einem hinteren Körper (10), der eine um eine Mittelachse (A1) zentrierte Seitenwand (11) aus steifem Material und wenigstens eine zum Festhaken an der Wand (100) ausgelegte Einrastklaue (20) aufweist, und
- einem vorderen Kragen (50), der eine Schulter (51) aus steifem Material aufweist, die sich nach außen gegenüber der Seitenwand (11) hervorstehend erstreckt,
**dadurch gekennzeichnet, daß** der hintere Körper (10) und der vordere Kragen (50) voneinander getrennt sind und durch einen umlaufenden Ring (80) aus weichem Material miteinander verbunden sind, der in der Richtung der Mittelachse (A1) elastisch verformbar ist.

2. Elektrische Dose (1) gemäß dem vorangehenden Anspruch, bei der der umlaufende Ring (80) durch Zug in der Richtung der Mittelachse (A1) mit einer Amplitude von wenigstens 13 mm, vorzugsweise von mehr als oder gleich 15 mm, elastisch verformbar ist.

3. Elektrische Dose (1) gemäß einem der vorangehenden Ansprüche, bei der der umlaufende Ring (80) durch Zusammendrücken in der Richtung der Mittelachse (A1) mit einer Amplitude von wenigstens 3 mm, vorzugsweise von mehr als oder gleich 5 mm, elastisch verformbar ist.

4. Elektrische Dose (1) gemäß einem der Ansprüche 1 bis 3, bei der der umlaufende Ring (80) im nicht beanspruchten Zustand eine kreiszylindrische Form um die Mittelachse (A1) aufweist.

5. Elektrische Dose (1) gemäß einem der Ansprüche 1 bis 3, bei der der umlaufende Ring (80) im nicht beanspruchten Zustand wenigstens eine umlaufende Ausbuchtung (81) aufweist.

6. Elektrische Dose (1) gemäß dem vorangehenden Anspruch, bei der die umlaufende Ausbuchtung (81) einen Balg aufweist, der dazu ausgelegt ist, in der Richtung der Mittelachse (A1) auseinandergezogen und zusammengedrückt zu werden.

7. Elektrische Dose (1) gemäß einem der vorangehenden Ansprüche, bei der jede Einrastklaue (20) zwischen einer ausgebrachten Stellung, in der sie sich aus der Seitenwand (11) hervorstehend erstreckt, und einer zur Mittelachse (A1) hin zurückgezogenen Stellung bewegbar ist.

8. Elektrische Dose (1) gemäß dem vorangehenden Anspruch, bei der jede Einrastklaue (20) elastisch in die ausgebrachte Stellung zurückgesetzt wird und jede Einrastklaue (20) einen für einen Benutzer zugänglichen Betätigungsteil aufweist, um die Einrastklaue (20) in die zurückgezogene Stellung zu setzen.

9. Elektrische Dose (1) gemäß Anspruch 8, bei der jede Einrastklaue (20) eine Schraubsenke (30) aufweist, die dazu ausgelegt ist, die Gewindestange einer Befestigungsschraube (40) eines Gerätemechanismus aufzunehmen, und die den Betätigungsteil bildet.

10. Elektrische Dose (1) gemäß dem vorangehenden Anspruch, bei der an der Vorderseite der Einrastklaue (20) ein Haken (31) vorgesehen ist, der eine Öffnung begrenzt, die in der Achse der Schraubsenke (30) liegt, um die Gewindestange der Schraube (40) aufzunehmen, und die zur Mittelachse (A1) hin offen ist, um der Schraube (40) zu ermöglichen, aus dem Haken (31) herauszukommen.

11. Elektrische Dose (1) gemäß Anspruch 8, bei der der Betätigungsteil einen Schlitz zum Einsetzen der Spitze eines Werkzeugs aufweist.

12. Elektrische Dose (1) gemäß einem der vorangehenden Ansprüche, bei der jede Einrastklaue (20) in einer in der Seitenwand (11) geschaffenen Öffnung (13) angeordnet ist und durch eine Dichtung (14) aus weichem Material wenigstens teilweise mit dem Rand der Öffnung (13) verbunden ist.

13. Elektrische Dose (1) gemäß dem vorangehenden Anspruch, bei der die Dichtung (14) teilweise durch den umlaufenden Ring (80) gebildet ist und der umlaufende Ring (80) an der Stelle jeder Einrastklaue (20) eine Wulst (82) bildet.

14. Elektrische Dose (1) gemäß dem vorangehenden Anspruch, bei der sich die Wulst (82) nur über einen Teil des Umfangs des umlaufenden Rings (80) über eine Länge von mehr als der Breite der Einrastklaue (20) erstreckt.

15. Elektrische Dose (1) gemäß einem der vorangehenden Ansprüche, bei der jede Einrastklaue (20) auf ihrer Außenseite eine Rampe (23) aufweist, die ermöglicht, die Einrastklaue (20) zu zwingen, sich zu Gunsten des Eindringens der elektrischen Dose (1) in die Öffnung (101) in Richtung auf ihre zurückgezogene Stellung zu bewegen.

16. Elektrische Dose (1) gemäß einem der vorangehenden Ansprüche, bei der jede Einrastklaue eine zur Schulter hin gerichtete vordere Kante aufweist, die ein Mittel zum Anbringen eines Keils trägt.

17. Elektrische Dose (1) gemäß einem der vorangehenden Ansprüche, bei der der hintere Körper (10) wenigstens eine Öffnung (15) zum Durchführen eines elektrischen Leiters aufweist, die durch einen Deckel (16) aus weichem Material verschlossen ist.

18. Verfahren zum Einbringen einer elektrischen Dose (1) gemäß einem der vorangehenden Ansprüche durch eine in einer Wand (100) geschaffene Öffnung (101), bei dem vorgesehen ist, auf den hinteren Körper (10) der elektrischen Dose (1) eine Beanspruchung in Richtung auf die Wand (100) derart auszuüben, daß sich jede Einrastklaue (20) ins Innere des hinteren Körpers (10) zurückzieht, daß sich die Schulter (51) an die Wand (100) andrückt und daß sich jede Einrastklaue (20) automatisch nach außerhalb des hinteren Körpers (10) ausbringt und an der Rückseite der Wand (100) festhakt.

19. Einbringverfahren gemäß dem vorangehenden Anspruch, bei dem vorgesehen ist, jede Einrastklaue (20) zu zwingen, sich nach außerhalb des hinteren Körpers (10) auszubringen, indem eine seitliche Beanspruchung auf die Schraube (40) ausgeübt wird, wobei die elektrische Dose (1) dem Anspruch 9 oder 10 entspricht.

20. Verfahren zum Herausnehmen einer elektrischen Dose (1) gemäß einem der Ansprüche 1 bis 17, die sich anfangs in einer in einer Wand (100) geschaffenen Öffnung (101) befindet, das Schritte aufweist, die darin bestehen,
- jede Einrastklaue (20) so zu betätigen, daß sie sich ins Innere des hinteren Körpers (10) der elektrischen Dose (1) zurückzieht, und
- die elektrische Dose (1) aus der Öffnung (101) zu ziehen.

## Claims

1. An electrical box (1) for engaging through an opening (101) formed in a wall (100), said electrical box comprising:
• a rear body (10) that includes a side wall (11) made of rigid material, and that is centered on a central axis (A1), and at least one snap-fastener tab (20) that is adapted to catch onto the wall (100); and
• a front collar (50) including a shoulder (51) made of rigid material that extends outwards, projecting relative to said side wall (11);
the electrical box being **characterized in that** the rear body (10) and the front collar (50) are disjoint and connected together by a peripheral band (80) made of flexible material that is elastically deformable along the central axis (A1).

2. An electrical box (1) according to the preceding claim, wherein the peripheral band (80) is elastically deformable, in traction, along the central axis (A1), with an amplitude at least equal to 13 mm, preferably greater than or equal to 15 mm.

3. An electrical box (1) according to any preceding claim, wherein the peripheral band (80) is elastically deformable, in compression, along the central axis (A1), with an amplitude at least equal to 3 mm, preferably greater than or equal to 5 mm.

4. An electrical box (1) according to any one of claims 1 to 3, wherein, in its non-stressed state, the peripheral band (80) presents a circularly-cylindrical shape around the central axis (A1).

5. An electrical box (1) according to any one of claims 1 to 3, wherein, in its non-stressed state, the peripheral band (80) presents at least one peripheral bulge (81).

6. An electrical box (1) according to the preceding claim, wherein the peripheral bulge (81) forms a bellows that is adapted to be stretched and compressed along the central axis (A1).

7. An electrical box (1) according to any preceding claim, wherein each snap-fastener tab (20) is movable between a deployed position in which it projects from said side wall (11) and a retracted position in which it is retracted towards the central axis (A1).

8. An electrical box (1) according to the preceding claim, wherein, each snap-fastener tab (20) is resiliently returned towards its deployed position, and each snap-fastener tab (20) carries a driver portion that is accessible to a user so as to position said snap-fastener tab (20) in its retracted position.

9. An electrical box according to claim 8, wherein each snap-fastener tab (20) carries a screw-fastener well (30) that is adapted to receive the threaded shank of a fastener screw (40) for fastening an accessory mechanism, and that forms said driver portion.

10. An electrical box (1) according to the preceding claim, wherein, at the front of said snap-fastener tab (20), a hook (31) is provided that defines an opening that is situated on the axis of said screw-fastener well (30) so as to receive the threaded shank of the screw (40), and that is open towards the central axis (A1) so as to enable the screw (40) to escape from the hook (31).

11. An electrical box (1) according to claim 8, wherein said driver portion presents an insertion slot for inserting the tip of a tool.

12. An electrical box (1) according to any preceding claim, wherein each snap-fastener tab (20) is situated in an opening (13) that is formed in the side wall (11), and is connected to the edge of the opening (13), at least in part, via a gasket (14) made of flexible material.

13. An electrical box (1) according to the preceding claim, wherein, said gasket (14) is formed, in part, by the peripheral band (80), and said peripheral band (80) forms a bead (82) in register with each snap-fastener tab (20) .

14. An electrical box (1) according to the preceding claim, wherein said bead (82) extends over a fraction only of the outline of the peripheral band (80), over a length that is greater than the width of the snap-fastener tab (20) .

15. An electrical box (1) according to any preceding claim, wherein the outside face of each snap-fastener tab (20) carries a ramp (23) that makes it possible to force said snap-fastener tab (20) to move towards its retracted position by driving the electrical box (1) into said opening (101).

16. An electrical box according to any preceding claim, wherein each snap-fastener tab presents a front rim that faces towards said shoulder and that carries securing means for securing a spacer.

17. An electrical box (1) according to any preceding claim, wherein the rear body (10) presents at least one opening (15) for passing an electrical conductor, which opening is closed by a diaphragm (16) of a flexible material.

18. An engagement method for engaging an electrical box (1) in accordance with any preceding claim through an opening (101) that is formed in a wall (100), wherein provision is made to exert a force on the rear body (10) of the electrical box (1), which force is directed towards the rear of the wall (100), such that each snap-fastener tab (20) retracts into the rear body (10), the shoulder (51) bears against the wall (100), and then each snap-fastener tab (20) deploys automatically out from the rear body (10) and catches onto the rear of the wall (100) .

19. An engagement method according to the preceding claim, wherein, the electrical box 1 is in accordance with claim 9 or claim 10, and provision is made to force each snap-fastener tab (20) to deploy out from the rear body (10) by exerting a lateral force on the screw (40).

20. An extraction method for extracting an electrical box (1) in accordance with any one of claims 1 to 17 that is initially situated in an opening (101) that is formed in a wall (100), the extraction method comprising steps consisting in:
• maneuvering each snap-fastener tab (20) in such a manner that it retracts into the rear body (10) of the electrical box (1); and
• pulling the electrical box (1) out of the opening (101) .
